# EUROPEAN PATENT SPECIFICATION

(11) **EP 0 544 807 B1**
(45) Date of publication and mention of the grant of the patent: **22.02.1995**
(21) Application number: 91916402.0
(22) Date of filing: 29.08.1991
(51) Int. Cl.: B60G 3/14, B60G 17/00, B62D 61/12

(54) **WHEEL SUSPENSION DEVICE**
RADAUFHÄNGUNGSVORRICHTUNG
DISPOSITIF DE SUSPENSION DE ROUE

(30) Priority: 31.08.1990 SE 9002782
(43) Date of publication of application: 09.06.1993
(73) Proprietor: SJÖLUND, Anders, S-902 51 Umea (SE)
(72) Inventor: SJÖLUND, Anders, S-902 51 Umea (SE)
(74) Representative: Onn, Thorsten
(86) International application number: SE9100566
(87) International publication number: WO9204197

(56) References cited:
- CA-A- 1 154 468
- DE-C- 3 416 861
- GB-A- 2 187 149
- US-A- 3 332 701

## Description

This invention relates to a wheel suspension device for a trailer or the like, which is intended to be towed by passenger cars or other small traction vehicles, and which is provided with two longitudinal, parallel frame side members, one on each side of the longitudinal center line of the trailer, one of several wheel suspension devices, one for each wheel, being arranged at each frame side member, and each wheel suspension device comprising an arm, the one end portion of which is pivotally arranged on a first dowel or axle, and the other end portion of which cooperates with a bellows funtioning as a spring suspension means.

By GB patent 2 187 149 is previously known a wheel suspension device for trailers, which is intended to be fastened onto the underside of the frame side member. The wheel suspension device comprises an arm, the one end portion of which is pivotally arranged on a dowel, and the other end portion of which cooperates with a bellows which functions as a spring suspension means. The entire wheel suspension device is positioned on the underside of the frame side member, whereby the platform of the trailer comes on an unneccessarily high level over the ground surface, which makes loading of and unloading of the trailer more difficult. Furthermore the wheel suspension device on each side of the trailer are connected by means of a common axle constituting the means for fastening the wheels. Due to that fact the movements of the one wheel on the one side of the trailer will influence the movements of the wheel on the other side of the trailer, which of course deteriorates the movement qualities of the trailer.

This invention intends to remove the problems with known technique. This has been made possible by a suspension device of the kind mentioned by way of introduction which is characterized by the combination of the following features:
- The arm has an extension that is essentially parallel with the extension of the frame side member;
- The first dowel or axle is so arranged that it projects from the outside of the side member, whereby the wheel suspension device has a placing beside the frame side member and at a level over the ground surface that essentially corresponds to the level of the frame side member;
- A second dowel or axle is fastened onto the arm and projects from this one and is intended to receive a wheel drum which is rotably arranged on the dowel or axle and is intended to receive a wheel, whereby each wheel becomes individually suspended.

Due to these facts the trailer can be made with a low-built design which gives a low centre of gravity and is of great value when loading and unloading the trailer. Furthermore, due to the low centre of gravity, the road safety is improved of an equipage comprising a passenger car and a trailer provided with the suspension device according to the invention. Due to the fact that the wheels of the trailer are individually suspended, the movement qualities of the trailer are improved which also has a positive impact upon the road safety of the equipage.

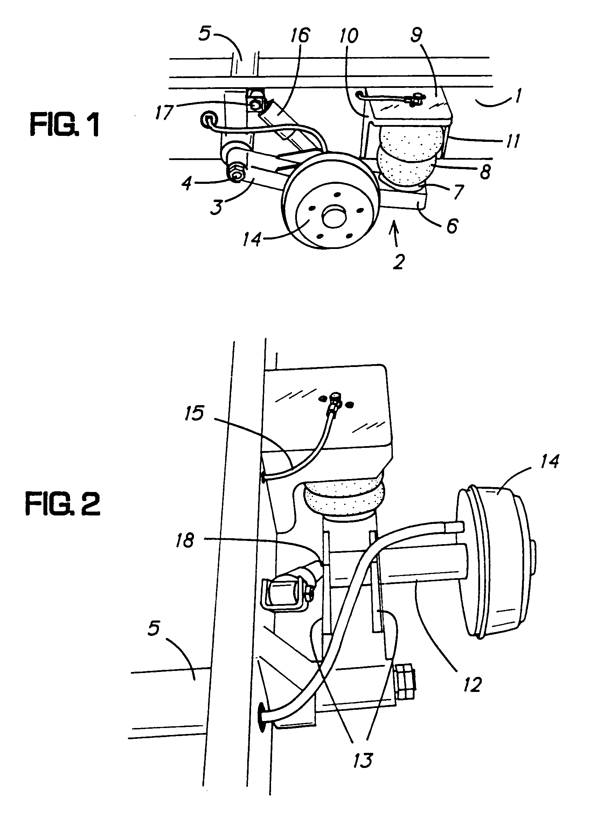

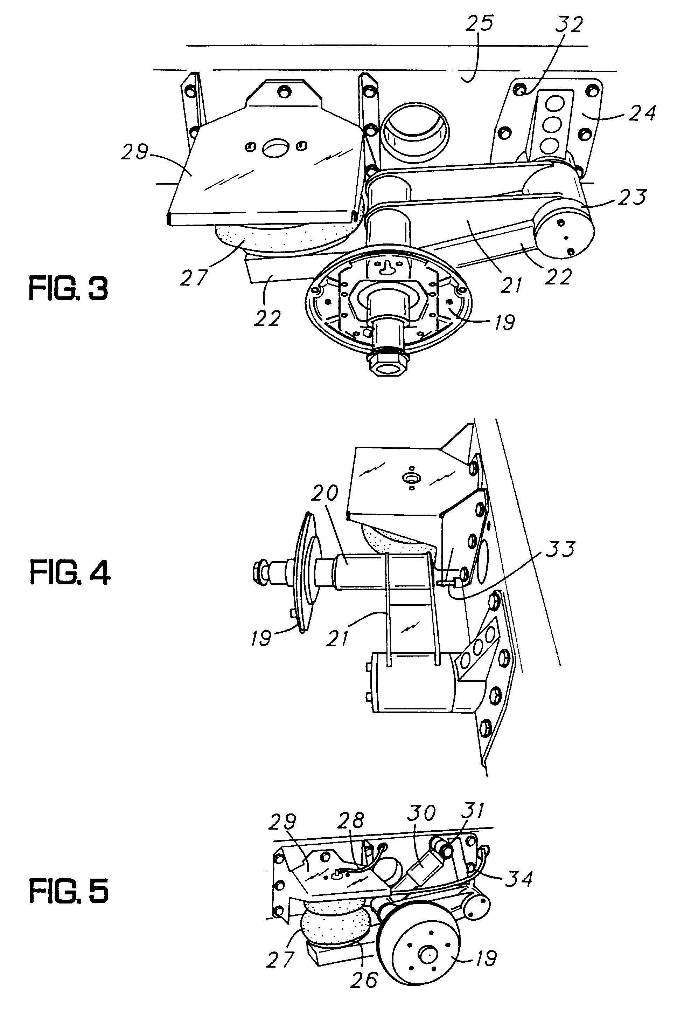

Two preferred embodiments of the invention shall be described more closely below with reference to the accompanying drawings, where Fig. 1 shows a side view of a first embodiment of the wheel suspension device, Fig. 2 shows a perspective view, seen obliquely from above, of the device according to Fig. 1, Fig. 3 shows a perspective view of a second embodiment of the wheel suspension device, fig. 4 shows a view, seen obliquely from above, of the device according to Fig. 3, and Fig. 5 shows a perspective view of a complete device according to the second embodiment, provided with shock absorbers and conduits.

Referring to Figs. 1 and 2 is shown there the first embodiment of the wheel suspension device. The wheel suspension device is fastened on the outside of a longitudinal frame side member 1 being a part of the framing of the trailer/caravan. The wheel suspension device comprises an arm 2, the one end portion 3 of which is pivotally journalled on an axle 4 which projects essentially perpendicularly and essentially horizontally from the frame member 1. This axle 4 can extend across and through the framing of the trailer/caravan and also constitute an axle dowel of the wheel suspension device on the other side of the trailer/caravan. In this connection the axle 4 suitably goes through a transverse, tubular member 5 (see Fig. 2), which accordingly consistutes a transverse frame member in the framing of the trailer/caravan. Of course, it is possible instead to fasten an axle dowel onto the outside of the frame side member 1, which dowel projects essentially perpendicularly and essentially horizontally from the frame member. The other end portion 6 of the arm 2 has a plate 7 on its top side. This plate 7 constitutes a lower attachment for a bellows 8 which can be blown up by means of a pneumatic medium. The bellows 8 is made of an elastic material, for instance rubber. The upper attachment of the bellows 8 also comprises a plate 9 which is fastened to the outside of the frame side member 1, suitably by means of welding, riveting or by bolts. The plate 9 is provided with two projecting protective shields 10, 11 which shall prevent dirty particles to penetrate the suspension device. Thus, the plates 9, 10, 11 form a cover-like means for the bellows 8.

As is apparent from Fig. 1, the arm 2 is directed obliquely backwards, and extends essentially parallel with the longitudinal direction of the longitudinal frame member 1. About at the middle of the arm 2 is stationarily arranged an axle 12 which extends essentially perpendicularly and essentially horizontally outwards from the arm 2. The axle 12 is stationarily arranged in anchoring irons 13, which are welded on top of the arm 2. At the outer portion of the axle 12 there is rotatably arranged a wheel drum 14 and on this wheel drum a wheel is intended to be mounted. Due to this arrangement every wheel becomes individually suspended.

When driving the trailer/caravan, which is provided with the device according to the invention, over for instance an elevation in the road way, the arm 2 will pivot in the counter clock-wise direction in relation to the first axle against the action of the bellows 8. This one, as has been mentioned previously, can be filled with or evacuated from a pneumatic medium. If there is a desire to have a hard spring suspension, more of the pneumatic medium shall be filled into the bellows, whereas the medium shall be evacuated from the bellows 8 to a certain extent if there is a desire to have a soft spring suspension, as is the case when driving the trailer and having no or a little load on the same. The pneumatic medium (air) is pumped into and out of, respectively, the bellows 8 via a conduit 15.

When driving a trailer/caravan on a bumby road, there is a risk for swinging movements. In order to eliminate or reduce this risk, there is arranged a shock absorber 16. The upper end of the shock absorber 16 is articulately fastened onto a dowel 17 or the like which projects essentially perpendicularly and essentially horizontally from the upper portion of the side surface of the longitudinal frame member 1. The lower end of the shock absorber is articulately fastened onto a dowel 18 or the like which projects essentially horizontally and essentially perpendicularly from the arm 2 into a space between the lower part of the frame member 1 and the arm 2.

The second embodiment shown in Figs. 3-5 has principally the same technical construction as the first embodiment. Thus, the wheel drum 19 is rotatably fastened to the outer end of an axle 20 which in its turn is stationarily attached to anchoring irons 21 about at the middle of an elongated arm 22 on its top side. This arm 22 is pivotally suspended at its front end on a axle 23 or the like in such a way that its rear end can be pivoted upwards or downwards. The axle 23 is stationarily fastened by a means 24 on the one frame side member 25 of the trailer in such a way that the dowel is directed essentially horizontally and essentially perpendicularly from the side member. The arm 22 extending essentially parallel with the side member 25 has in its rear end a plate 26 which constitutes a lower attachment for a rubber bellows 27 or the like into which a pneumatic medium, for instance air, can, be blown in or be sucked out via a conduit 28. In similarity with the first embodiment a cover-like means 29 is intended to protect the rubber bellows 27.

The second embodiment is distinguished from the first one in the detail design. Thus, the cover-like means 29 and the means 24, on which the axle 23 is fastened, are fastened onto the outside of the frame side member 25 by means of bolts instead of by means of welding.

Furthermore, the anchoring irons 21 on the top side of the arm 22 has a somewhat different design in that they extend up to the axle 23 of the arm 22.

As is apparent from Fig. 5 the complete wheel suspension device has a shock absorber 30. In that connection the upper end of the shock absorber is articulately fastened onto a dowel 31 or the like which is anchored in the frame side member 25 at the upper portion of the means 24. This dowel 31 is suitably screwed into the hole of one 32 of the bolts (see Fig. 3), which keep the means 24 in place. The lower part of the shock absorber is articulately fastened onto a dowel 33 which is stationarily attached on the arm 22 below the axle 20 of the wheel drum 19 and which projects essentially horizontally and essentially perpendicularly from the arm 22 towards the frame side member 25. In Fig. 5 there is also shown a conduit 34 which is intended to convey hydraulic oil to the wheel drum 19.

The invention is of course not limited to the mentioned embodiment but can be modified within the scope of the following claims.

## Claims

1. A wheel suspension device for a trailer or the like, which is intended to be towed by passenger cars or other small traction vehicles, and which is provided with two longitudinal, parallel frame side members, one on each side of the longitudinal center line of the trailer, one or several wheel suspension devices, one for each wheel, being arranged at each frame side member, and each wheel suspension device comprising an arm, the one end portion of which is pivotally arranged on a first dowel or axle, and the other end portion of which cooperates with a bellows funtioning as a spring suspension means, **characterized** by the combination of the following features:
- The arm (2; 22) has an extension that is essentially parallel with the extension of the frame side member (1; 25);
- The first dowel or axle (4; 23) is so arranged that it projects from the outside of the side member, whereby the wheel suspension device has a placing beside the frame side member (1; 25) and at a level over the ground surface that essentially corresponds to the level of the frame side member;
- A second dowel or axle (12; 20) is fastened onto the arm and projects from this one and is intended to receive a wheel drum (14; 19) which is rotably arranged on the dowel or axle (12; 20) and is intended to receive a wheel, whereby each wheel becomes individually suspended.

2. A wheel suspension device according to claim 1, **characterized** in that the bellows (8; 27) is made of an elastic material, and that the underside of the bellows directly or indirectly via a plate (7; 26) or the like is in contact with the top side of the arm end, whereas the top side of the bellows (8; 27) is in contact with the underside of an attachement plate (9; 29) which is fastened to the frame side member (1; 25).

3. A wheel suspension device according to claim 1 or 2, **characterized** in that the second dowel or axle (12; 20) is arranged essentially at the middle of the arm (2; 22) and stationarily attached in anchoring irons (13; 21) which are fastened on top of the arm (2; 22), the dowel or the axle (12; 20) projecting essentially perpendicularly and essentially horizontally from the arm (2; 22).

4. A wheel suspension device according to any one of the claims 1-3, **characterized** in that a shock absorber means (16; 30) is arranged in order to prevent swinging movements, its upper end being pivotally arranged on a dowel (17; 31) or the like, which is fastened onto the frame side member (1) and its lower end being pivotally attached to a dowel (18; 33) or the like, which is fastened onto the arm (2; 22).

5. A wheel suspension device according to any one of the preceding claims, **characterized** in that the attachment plate (9; 29) connects two side plates (10, 11) with each other so that a cover-like means is formed for the bellows (8, 27) and that the attachment plate (9; 29) is connected with a conduit (15; 28) for insertion of a pneumatic medium into the bellows (8; 27).

## Patentansprüche

1. Radaufhängungsvorrichtung für ein Anhängefahrzeug oder dergleichen, das dazu vorgesehen ist durch ein Personenfahrzeug oder ein anderes kleines Zugfahrzeug geschleppt zu werden und das mit zwei länglichen, parallelen Rahmenseitenteilen versehen ist, eines aufjeder Seite der Längsmittellinie des Anhängefahrzeuges, wobei eine oder mehrere Radaufhängungsvorrichtungen, eine für jedes Rad, an jedem Rahmenseitenteil angeordnet ist bzw. sind, und wobei jede Radaufhängungsvorrichtung einen Arm aufweist, wobei dessen einer Endabschnitt drehbar an einem ersten Paßstift oder einer ersten Achse angeordnet ist, und der andere Endabschnitt daraus mit einem Faltenbalg zusammenarbeitet, der als eine Federaufhängungsvorrichtung arbeitet,
**gekennzeichnet durch**
die Kombination der folgenden Merkmale:
- der Arm (2; 22) weist einen Vorsprung auf, der im wesentlichen parallel zu der Erstreckung des Rahmenseitenteiles (1; 25) ist,
- der erste Paßstift oder die erste Achse (4; 23) ist so angeordnet, daß er bzw. sie von der Außenseite des Seitenteiles vorsteht, wodurch die Radaufhängungsvorrichtung seitlich des Rahmenseitenteiles (1; 25) und in einem Niveau oberhalb der Bodenfläche angeordnet ist, das im wesentlichen dem Niveau des Rahmenseitenteiles entspricht;
- ein zweiter Paßstift oder eine zweite Achse (12; 20) ist an dem Arm befestigt und springt von diesem vor und ist dazu vorgesehen, eine Radtrommel (14; 19) aufzunehmen, die drehbar auf dem Paßstift oder der Achse (12; 20) angeordnet ist, und die dazu vorgesehen ist, ein Rad aufzunehmen, wodurch jedes Rad einzeln aufgehängt ist.

2. Radaufhängungsvorrichtung nach Anspruch 1,
**dadurch gekennzeichnet,**
daß der Faltenbalg (8; 27) aus einem elastischen Material hergestellt ist, und daß die Unterseite des Faltenbalges direkt oder indirekt über eine Platte (7; 26) oder dergleichen mit der Oberseite des Armendes in Kontakt steht, während die Oberseite des Faltenbalges (8; 27) mit der Unterseite einer Befestigungsplatte (9; 29) die an dem Rahmenseitenteil (1; 25) befestigt ist, in Kontakt steht.

3. Radaufhängungsvorrichtung nach Anspruch 1 oder 2,
**dadurch gekennzeichnet,**
daß der zweite Paßstift oder die zweite Achse (12; 20) im wesentlichen in der Mitte des Armes (2; 22) angeordnet ist und fest mit Verankerungseisen (13; 21) verbunden ist, die am Oberteil des Armes (2; 22) befestigt sind, wobei der Paßstift oder die Achse (12; 20) im wesentlichen rechtwinklig und im wesentlichen horizontal von dem Arm (2; 22) absteht.

4. Radaufhängungsvorrichtung nach einem der Ansprüche 1 bis 3,
**dadurch gekennzeichnet,**
daß eine Stoßaufnahmevorrichtung (16; 30) angeordnet ist, um Schwingungsbewegungen zu verhindern, wobei deren oberes Ende drehbar an einem Paßstift (17; 31) oder dergleichen angeordnet ist, der an dem Rahmenseitenteil (1) befestigt ist und deren unteres Ende drehbar an einem Paßstift (18; 33) oder dergleichen befestigt ist, aber an dem Arm (2; 22) befestigt ist.

5. Radaufhängungsvorrichtung nach einem der vorhergehenden Ansprüche,
**dadurch gekennzeichnet,**
daß die Befestigungsplatte (9; 29) zwei Seitenplatten (10, 11) miteinander so verbindet, daß eine abdeckungsähnliche Vorrichtung für die Faltenbalgen (8; 27) gebildet ist und daß die Befestigungsplatte (9; 29) mit einer Leitung (15; 28) verbunden ist, um ein pneumatisches Medium in die Faltenbalgen (8; 27) einzuführen.

## Revendications

1. Dispositif de suspension de roue pour une remorque ou analogue, qui est prévu pour être remorqué par des voitures particulières ou autres petite véhicules de traction, et qui est pourvu de deux éléments latéraux longitudinaux et parallèles formant châssis, un sur chaque côté de la ligne centrale longitudinale de la remorque, un ou plusieurs dispositifs de suspension de roue, un pour chaque roue, étant agencés à chaque élément latéral formant châssis, et chaque dispositif de suspension de roue comprenant un bras dont une partie d'extrémité est disposée de façon pivotante sur une première cheville ou essieu, et dont l'autre partie d'extrémité coopère avec un soufflet fonctionnant comme moyen de suspension à ressort, caractérisé par la combinaison des caractéristiques suivantes :
- le bras (2 ; 22) possède une extension qui est essentiellement parallèle avec l'extension de l'élément latéral formant châssis (1 ; 25) ;
- la première cheville ou essieu (4 ; 23) est agencée de façon à faire saillie depuis l'extérieur de l'élément latéral par quoi le dispositif de suspension de roue se trouve à côté de l'élément latéral formant châssis (1 ; 25) et à un niveau sur la surface du sol qui correspond essentiellement au niveau de l'élément latéral formant châssis ;
- une deuxième cheville ou essieu (12 ; 20) est fixée sur le bras et fait saillie de celui-ci et est conçue pour recevoir un tambour de roue (14 ; 19) qui est disposé de façon rotative sur la cheville ou l'essieu (12 ; 20) et qui est prévue pour recevoir une roue, par quoi chaque roue sera suspendue individuellement.

2. Dispositif de suspension de roue selon la revendication 1, caractérisé en ce que le soufflet (8 ; 27) est réalisé en un matériau élastique, et en ce que le côté inférieur du soufflet est en contact directement ou indirectement par l'intermédiaire d'une plaque (7 ; 26) ou analogue avec le côté supérieur de l'extrémité de bras tandis que le côté supérieur du soufflet (8 ; 27) est en contact avec le côté inférieur d'une plaque de fixation (9 ; 29) qui est fixée à l'élément latéral formant châssis (1 ; 25).

3. Dispositif de suspension de roue selon la revendication 1 ou 2, caractérisé en ce que la deuxième cheville ou essieu (12 ; 20) est disposée essentiellement au milieu du bras (2 ; 22) et est attachée de manière stationnaire à des fers d'ancrage (13 ; 21) qui sont fixés au-dessus du bras (2 ; 22), la cheville ou l'essieu (12 ; 20) faisant saillie essentiellement perpendiculairement et essentiellement horizontalement du bras (2 ; 22).

4. Dispositif de suspension de roue selon l'une des revendications 1 à 3, caractérisé en ce qu'un moyen d'absorption de chocs (16 ; 30) est prévu pour empêcher des mouvements de pivotement, son extrémité supérieure étant disposée de façon pivotante sur une cheville (17 ; 31) ou analogue qui est fixée sur l'élément latéral formant châssis (1) et son extrémité inférieure est attachée de façon pivotante à une cheville (18 ; 33) ou analogue qui est fixée au bras (2 ; 22).

5. Dispositif de suspension de roue selon l'une des revendications précédentes, caractérisé en ce que la plaque de fixation (9 ; 29) relie deux plaques latérales (10 ; 11) l'une avec l'autre de façon qu'un moyen en forme de couvercle soit réalisé pour le soufflet (8 ; 27) et que la plaque de fixation (9 ; 29) soit connectée à un conduit (15 ; 28) pour l'insertion d'un milieu pneumatique dans le soufflet (8 ; 27).
